# EUROPEAN PATENT SPECIFICATION

(11) **EP 1 760 512 B1**
(45) Date of publication and mention of the grant of the patent: **31.07.2013**
(21) Application number: 05752924.0
(22) Date of filing: 22.06.2005
(51) Int. Cl.: C03C 27/10, G02B 1/00, G02B 13/14, G02B 21/16, G02B 23/24, G01N 21/64

(54) **OPTICAL APPARATUS FOR FLUORESCENCE OBSERVATION**
OPTISCHE VORRICHTUNG ZUR FLUORESZENZBEOBACHTUNG
APPAREIL OPTIQUE POUR OBSERVATION DE FLUORESCENCE

(30) Priority: 23.06.2004 JP 2004185309
(43) Date of publication of application: 07.03.2007
(73) Proprietor: Olympus Corporation, Tokyo 151-0072 (JP)
(72) Inventor: HAYASHI, Takae, Tokyo 192-8512 (JP); KINOSHITA,Hiroaki, Tokyo 192-8512 (JP)
(74) Representative: von Hellfeld, Axel
(86) International application number: PCT/JP2005/011470
(87) International publication number: WO 2006/001314

(56) References cited:
- DE-A1- 2 606 064
- JP-A- 7 020 385
- JP-A- 10 153 529
- JP-A- 11 174 339
- JP-A- 2000 284 181
- JP-A- 2003 327 833
- JP-A- 2004 107 602
- US-A1- 2002 027 707
- US-A1- 2003 197 945
- H. Naumann, G. Schröder: "Bauelemente der Optik", 1992, Carl Hanser Verlag, München Wien ISBN: 3-446-17036-7 vol. 6, pages 80-81,

## Description

### Technical Field

This invention relates to an optical device for fluorescence imaging. In particular, this invention relates to an optical device for fluorescence imaging, such as a microscope for fluorescence imaging or an endoscope for fluorescence imaging, wherein ultraviolet excitation light is irradiated onto an object to be observed and the fluorescence emitted from the object is observed.

### Background Art

In resent years, in the field of biological imaging of organism such as a cell, gene, etc., fluorescence imaging is now mainly employed, wherein weak fluorescence (autofluorescence) emitted from a living organism, when an excitation light is irradiated onto the living organism, is detected by making use of a fluorescence microscope or a fluorescence endoscope. This fluorescence imaging is based on the fact that since a specific kind of substance, which is fluorescent-stained to cells, is observed without giving any substantial damage to cells, it is possible, through the irradiation of a light of short wavelength directly onto a specimen or cells inside a living body, to observe the fluorescence to be emitted from the specimen or cells.

In the case of fluorescence microscope for instance, an excitation light having an excitation wavelength of 365, 488 or 550 nm is mainly employed, thereby making it possible to observe fluorescence having an observation wavelength of approximately 450, 550 or 600 nm, respectively. Recently, it is tried to employ a method wherein a hematoporphyrin-based medicine is vascularly injected into cancer cells and fluorescence emitted from the hematoporphyrin-based medicine accumulated in the cancer cells is observed. It is also tried to employ an excitation light having an excitation wavelength of as short as 340 nm for the purpose of observing calcium ion in a living body.

Further, in the case of fluorescence endoscope, there are two types of endoscope for the purpose of mainly observing cancer, i.e., one which is adapted to observe fluorescence having an observation wavelength of approximately 500-630 nm with an excitation wavelength of 390-470 nm, and the other which is adapted to observe fluorescence having an observation wavelength of approximately 470-690 nm with an excitation wavelength of 390-440 nm.

When it is desired to employ an excitation light of short excitation wavelength such as 340 nm, it is necessary to ensure that the transmittance of excitation light of around 340 nm in wavelength is at least 20% or more. Further, in the case of fluorescence imaging, since the autofluorescence of the optical materials constituting the optical system of the imaging device is fairly large, noise is generated due to this autofluorescence of the optical materials on the occasion of irradiating an excitation light, thereby considerably deteriorating the contrast of the image of observation. In the fluorescence imaging employed in recent years in particular, there has been an increasing trend to employ a weaker fluorescent substance which is minimal in toxicity in order to meet the increasingly strong needs to observe the fluorescence from a living organism. Thus, there is increasing needs to make it possible to observe further weaker fluorescence. In order to make it possible to observe such a weak fluorescence of an object with high sensitivity, it is required to minimize, as completely as possible, any noise in the optical path. As for the factors giving rise to the generation of noise in the optical path, they include glass material, adhesive, oil, thin film, etc. With respect to the contribution of these factors to the generation of noise, glass is most prominent. However, the contribution of the adhesive to be employed for the bonding between lens and lens cannot be disregarded, thus necessitating further improvement in this respect.

As for the adhesive for bonding optical elements, a photosetting adhesive is generally employed (see, for example, JA-A 10-95967). However, since this photosetting adhesive contains, in large quantities, an aromatic oligomer having a large number of π-atoms, polymerization initiator and additives, autofluorescence is more likely to be generated due to the excitation light.

With a view to inhibit such an autofluorescence, there has been proposed a set of objective lens made of quartz glass, comprising, as mentioned from an object, a first group of lenses exhibiting a positive refractive power, a second group of lenses exhibiting a positive refractive power, and a third group of lenses exhibiting a negative refractive power, exhibiting a high transmittance to an excitation light having a wavelength of not more than 340 nm, and being minimal in autofluorescence (see, for example, JA-A 2000-284181). There has been also proposed a set of objective lens wherein no anti-refection film is provided, quartz glass is employed as an optical glass material exhibiting low autofluorescence, and the set of objective lens is constructed without using adhesive to thereby further suppress the generation of autofluorescence (see, for example, JA-A 11-23976).

Further, there has been also proposed a fluorescence endoscope which is provided with an excitation light cut-off filter which is positioned in front of an image pickup element and is designed to cut off the reflected excitation light that has been reflected by a biological tissue on the occasion of observing the autofluorescence emitted from the biological tissue, thereby making it possible to accurately distinguish the normal tissue from a cancer tissue (see, for example, JA-A 2002-10969).

However, the technique described in JA-A 2000-284181) takes notice of only the lens constituting the optical system and pays no attention with regard to the other materials exhibiting optical properties. Further, the objective lens disclosed in JA-A 11-23976 is accompanied with problems that even though it is constructed without using an adhesive, it is very difficult to bond the components each having a specific curvature to each other without using an adhesive, and that the bonded structure of lens each having different configuration is more likely to generate an optical strain due to change in temperature.

Even in the case of the fluorescence endoscope described in JA-A 2002-10969, even though it is possible to eliminate the reflected excitation light by means of the excitation light cut-off filter, it is impossible to eliminate the autofluorescence to be generated from the materials constituting the optical system, thus failing to overcome the problem of the deterioration of contrast.

JP 10/1535298 discloses a method of producing a fluorescent standard sample, by which fluorescence can be generated stably for use in adjustment of a fluorescent microscope. Fluorescent inorganic material particles are mixed with a non-fluorescent silicone adhesive placed on a cover glass, the non-fluorescent silicone adhesive is applied to a slide glass, and the glasses are placed together for observation of the fluorescence produced by the inorganic particles to adjust the fluorescence microscope. The glasses may be encapsulated. If the encapsulant has fluorescence, the encapsulate is prevented from entering the field of view.

DE 26 06 064 discloses to use silicon oil in an immersion lens system, because silicon oil does not produce autofluorescence and has a refraction index which can be used to correct a refraction index of the immersion lens system.

The present invention has been accomplished in view of the aforementioned problems and hence the object of the present invention is to provide an optical device for fluorescence imaging which is capable of effectively inhibiting the autofluorescence to be generated by an excitation light.

### Disclosure of Invention

According to claim 1, there is provided an optical device for observation to fluorescence emitted from an object equipped with a pluralityof lenses. The optical device may comprise a silicone-based bonding agent containing a low-autofluorescent substance interposed between the optical elements to bond the plurality of optical elements to each other.

Since the silicone-based bonding agent to be employed in the optical device for fluorescence imaging is low in autofluorescence, the magnitude of fluorescence to be generated as the silicone-based bonding agent is irradiated with an excitation light is very small and the transmittance of the fluorescence of short wavelength region into the silicone-based bonding agent is also high without generating discoloration. Therefore, the optical device for fluorescence imaging equipped with a plurality of optical elements bonded to each other by making use of such a silicone-based bonding agent is capable of observing fluorescence with very low noise and with high contrast.

The low-autofluorescent substance to be incorporated in the silicone-based bonding agent to be employed in the optical device for fluorescence imaging according to one aspect of the present invention comprises organopolysiloxane having a main chain skeleton having at least two vinyl groups bonded to a silicon atom, and a thermal polymerization inhibitor, wherein a content of low molecular siloxane is confined to not more than 0.004%, a content of impurities of transition metals and rare earth elements is confined to not more than 20 ppm, and a content of multiple-bond groups is confined to not more than 10%.

Since this silicone-based bonding agent is very low in content of low-autofluorescent substance which is an important factor for generating autofluorescence, in content of impurities such as transition metals and rare earth elements, in content of platinum catalyst for polymerizing siloxane, and in content of multiple-bond groups, the silicone-based bonding agent is especially minimal and hence effective in the bonding of optical elements to be employed in a microscope for fluorescence imaging or an endoscope for fluorescence imaging. As for specific examples of the transition metals which are representative impurity elements acting as a cause for generating autofluorescence, they include iron, cobalt and noble metals such as platinum. As for specific examples of the rare earth elements acting as a cause for generating autofluorescence, they include europium, neodymium, etc.

Incidentally, the content of impurities of transition metals and rare earth elements is determined depending on the level of fluorescence imaging as required. In the case of a microscope which is adapted to observe the fluorescence of general purpose by making use of GFP, etc., an acceptable content of impurities of transition metals and rare earth elements may be about 20 ppm. In the case of a high-quality microscope and a high-quality endoscope, an acceptable content of impurities of transition metals and rare earth elements may be about 10 ppm. In the case of an ultimate microscope and an ultimate endoscope which are capable of observing micro-fluorescence as in the case of observing living cells, the studies of which are expected to be vigorously developed in future, the content of impurities of transition metals and rare earth elements should be suppressed to 1 ppm or less since the autofluorescence should be substantially lowered to nearly zero.

Further, as for specific examples of the multiple-bond group of the low-autofluorescent substance, they include phenyl group, carbonyl group, thionyl group, ether group, acryl group, acetyl group, etc. These groups are considered as a cause for generating fluorescence by the effect of excitation by π-electrons as they are irradiated with ultraviolet light. In the case of the low-autofluorescent substance to be included in the silicone-based bonding agent according to one aspect of the present invention, the content of multiple-bond group is as very small as not more than 10% or preferably zero, so that the generation of autofluorescence can be minimized in the employment of the silicone-based bonding agent. Moreover, since the transmittance of the fluorescence of short wavelength region into the silicone-based bonding agent is also high without generating discoloration, this silicone-based bonding agent is very effective in bonding optical elements in the fabrication of a microscope for fluorescence imaging or an endoscope for fluorescence imaging.

The silicone-based bonding agent to be employed in an optical device for fluorescence imaging according to one aspect of the present invention may be either silicone oil or an addition reaction type silicone-based bonding agent. Silicone oil is constituted by the aforementioned composition and is not so adhesive in itself. However, when silicon oil is interposed between a plurality of optical elements, it is capable of bonding the optical elements to each other. On the other hand, the addition reaction type silicone-based bonding agent comprises a platinum group metal catalyst, and a silane coupling agent and when it is interposed between a plurality of optical elements, it is capable of strongly bonding the optical elements to each other due to its excellent bonding property as it is cured through the addition reaction thereof. Both of these silicone-based bonding agents are low in autofluorescence, so that they are capable of exhibiting excellent effects as they are employed for the bonding of optical elements of an optical device for fluorescence imaging.

As described above, the platinum group metal catalyst may be contained in the addition reaction type silicone-based bonding agent as long as the content thereof is limited to at most about 20 ppm. In the case of a high-quality microscope and a high-quality endoscope however, the content of the platinum group metal catalyst should be limited to not more than 10 ppm. In the case of an ultimate microscope and an ultimate endoscope which are capable of observing micro-fluorescence, the content of the platinum group metal catalyst should be limited to not more than 1 ppm.

Further, the content of the resin component in the addition reaction type silicone-based bonding agent should preferably be limited to not more than 10% by weight. When the content of the resin component is suppressed in this manner, the generation of autofluorescence can be minimized.

In the optical device for fluorescence imaging according to one aspect of the present invention, the optical elements employed therein may be lens for instance. As for the silicone-based bonding agent to be employed in bonding the lens, it is possible to employ either silicone oil or an addition reaction type silicone-based adhesive. Alternatively, it is also possible to employ silicone grease or silicone gel, each containing the same low-autofluorescent substance.

The optical device for fluorescence imaging according to the present invention includes an endoscope for fluorescence imaging and a microscope for fluorescence imaging. Since a silicone-based bonding agent containing a low-autofluorescent substance is employed in the bonding of the optical elements in these optical devices for fluorescence imaging, the generation of autofluorescence as well as the generation of noise can be minimized, thereby enabling to observe fluorescence of high contrast through this optical device.

As described above in detail, since the optical device for fluorescence imaging according to one aspect of the present invention is featured in that the silicone-based bonding agent to be employed for bonding the optical elements contains a low-autofluorescent substance, the generation of autofluorescence as the bonding agent is irradiated can be minimized and the transmittance of the fluorescence of short wavelength region into the silicone-based bonding agent is also high without generating discoloration. Therefore, according to the optical device such as a microscope for fluorescence imaging or an endoscope for fluorescence imaging, which is constructed as described above, it is possible to observe an image of high contrast.

### Brief Description of Drawings

FIG. 1 is a graph illustrating the comparison in autofluorescence between the bonding agents employed in the optical device for fluorescence imaging according to the embodiments of the present invention and the conventional adhesive;
FIG. 2 is a cross-sectional view showing a distal end of the insert portion of the endoscope according to Example 1 of the present invention; and
FIG. 3 is a cross-sectional view showing representative bonded lens in the objective lens of the microscope according to Example 2 of the present invention.

### Best Mode for Carrying Out the Invention

Various embodiments of the present invention will be explained as follows.

The silicone-based bonding agent to be employed in the optical device for fluorescence imaging according to a first embodiment of the present invention is a silicone adhesive containing organopolysiloxane having a main chain skeleton having at least two vinyl groups bonded to a silicon atom, a thermal polymerization inhibitor, a platinum group metal catalyst and a silane coupling agent.

In this silicone adhesive, since the organopolysiloxane constituting a base resin is selected to have a main chain skeleton having at least two vinyl groups bonded to a silicon atom, this silicone adhesive is enabled to exhibit a high transmittance to fluorescence.

The thermal polymerization inhibitor plays a role of maintaining excellent preservation stabilities. Specific preferable examples of the thermal polymerization inhibitor include a compound containing amine, a compound containing phosphorus, etc.

The platinum group metal catalyst is a polymerization initiator, thus enabling the base resin to cross-link through addition reaction, thus exhibiting excellent adhesion thereof to the glass material to be bonded. Specific preferable examples of the platinum group metal catalyst include a compound containing, as main components, platinum and chlorine, a compound containing, as main components, platinum and silicon, etc.

Since the silane coupling agent has a polar group exhibiting affinity to water molecule to such an extent that would not deteriorate the low-autofluorescence of the base resin, it is capable of exhibiting excellent adhesion to a glass material.

Since the silicone-based bonding agent to be employed in the optical device for fluorescence imaging according to a first embodiment of the present invention is featured in that the content of low molecular siloxane is confined to not more than 0.004%, the content of impurities of transition metals and rare earth elements is confined to not more than 20 ppm, the content of the multiple bond related to π-electron is confined to not more than 10%, and the content of the platinum group metal catalyst is confined to not more than 20 ppm, it is possible to secure low-autofluorescence.

The silicone-based bonding agent to be employed in the optical device for fluorescence imaging according to a second embodiment of the present invention is a silicone oil containing organopolysiloxane having a main chain skeleton having at least two vinyl groups bonded to a silicon atom. In this silicone-based bonding agent formed of silicon oil, since the organopolysiloxane constituting a base resin is selected to have a main chain skeleton having at least two vinyl groups bonded to a silicon atom, this silicone-based bonding agent is enabled to exhibit a high transmittance to fluorescence. Since this silicon oil is featured in that the content of low molecular siloxane is confined to not more than 0.004%, the content of impurities of transition metals and rare earth elements is confined to not more than 20 ppm, and the content of the multiple bond related to π-electron is confined to not more than 10%, it is possible to secure low-autofluorescence.

As described above, since the silicone-based bonding agents to be employed in the optical device for fluorescence imaging according to the first and the second embodiment of the present invention are low in autofluorescence, when the optical device for fluorescence imaging is equipped with optical elements which are bonded to each other by making use of any of these silicone-based bonding agents, it is possible to observe an image with excellent contrast.

Then, the autofluorescence of the silicone-based bonding agents (the first and second embodiments) to be employed in the optical device for fluorescence imaging according to the first and second embodiments of the present invention was performed as follows.

First of all, a pair of quartz glass plates were bonded to each other by making use of the bonding agents of aforementioned first and second embodiments with the film thickness of the bonding agent being adjusted to about 10 µm. Then, the resultant composite body was left to stand under the conditions of: 25°C and 50% humidity, thereby allowing the bonding agents to cure, thus manufacturing two kinds of assessment samples.

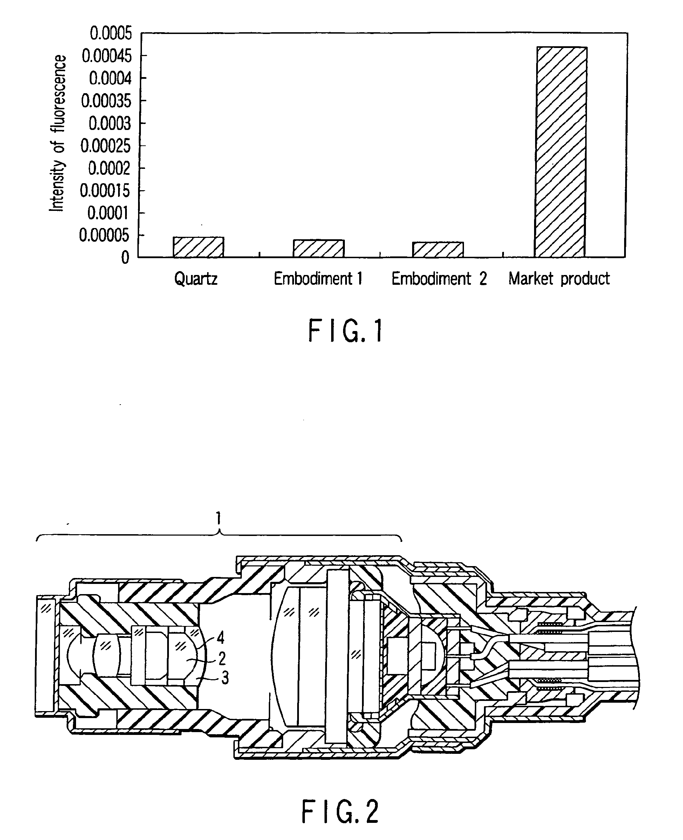

Then, these assessment samples were continuously irradiated with ultraviolet light having a wavelength of 365 nm for 25 hours, during which the generation of autofluorescence was measured by means of a measuring apparatus PHOTOMUL where a fluorescence microscope was employed, thus obtaining the results shown in FIG. 1. Incidentally, in addition to aforementioned two assessment samples of the first and second embodiments, there were also prepared other samples, i.e., a single body of quartz and a sample formed of a pair of quartz glass plates which were bonded to each other by making use of the conventional UV-curing adhesive (Norland 63) which was available in the market. These samples were also assessed in the same manner as the samples of the aforementioned first and second embodiments, the results thereof being also shown in FIG. 1.

It will be recognized from the results shown in FIG. 1 that two kinds of assessment samples of the first and second embodiments extremely low in autofluorescence as compared with the sample which was bonded by making use of the conventional adhesive NORLAND 63 available in the market.

Next, Examples of the present invention will be explained wherein the optical elements were bonded together by making use of the aforementioned silicone-based bonding agents (silicone adhesive and silicone oil).

### Example 1

FIG. 2 is a cross-sectional view showing a distal end of the insert portion of the endoscope according to Example 1 of the present invention. The distal end of the insert portion of the endoscope shown in FIG. 2 is constructed such that an objective optical system for observation 1 equipped with a plurality of lenses is built into the distal main body. This objective optical system was constructed to include a bonded lens comprising a lens 2 and a lens 3 which were bonded to each other by the bonding agent (silicone adhesive) 4 of the aforementioned embodiment 1.

More specifically, a small quantity of the silicone adhesive 4 was coated on the bonding surface of the lens 3 and then the lens 2 was superimposed onto the lens 3 and the silicone adhesive 4 was allowed to spread all over the joint surface. The resultant body was left to stand at room temperature or heated to cure the silicone adhesive 4, thereby manufacturing a bonded lens.

In this example, the silicone adhesive was allowed to cure through the contact between the base resin of the silicone adhesive 4 and the platinum group metal catalyst, thereby making it possible to fix the lens 2 to the lens 3. In this case, it was possible to inhibit the generation of autofluorescence by limiting the quantity of the multiple bond group in the base resin and also by limiting the quantity of the platinum group metal catalyst to such an extent to barely enable the base resin to crosslink. The thermal polymerization inhibitor functions to maintain the preservation stability of the adhesive prior to the contact between the base resin and the platinum group metal catalyst. Further, the base resin constituting the main component of the adhesive was excellent in transparency and the adhesion to glass and durability thereof were secured by the silane coupling agent.

As described above, since the contents of the platinum group metal catalyst and of the multiple bond group (phenyl group, carbonyl group, thionyl group, ether group, acryl group, acetyl group, etc.) were minimized, it was possible to minimize the generation of fluorescence by the effect of excitation by π-electrons as they are irradiated with ultraviolet light. Further, the transmittance of the fluorescence of short wavelength region into the silicone-based bonding agent was also high without generating discoloration. Furthermore, since the silicone-based adhesive was relatively excellent in heat resistance and in chemical resistance, was provided with rubber elasticity, and was low in shrinkage factor, it was possible to obtain an endoscope for fluorescence imaging which was capable of minimizing the generation of optical strain to be caused to occur on the occasion of curing and due to the environmental fluctuations.

As for the silicone adhesive 4, it is possible, other than silicone resin, to employ silicone gel. Further, the silicone adhesive 4 can be applied not only to the optical system built into the distal end of the insert portion of endoscope but also to the bonding mutually of optical members of the optical system of microscope wherein objective lens for fluorescence microscope and a solid-state image pickup elements are built therein.

### Example 2

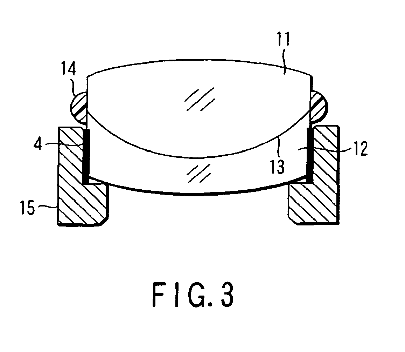

FIG. 3 is a cross-sectional view showing representative bonded lens in the objective lens of the fluorescence observing microscope. In this case, the first lens 11 and the second lens 12 are bonded together by making use of the silicone oil 13 of the aforementioned embodiment 2. A sealer is applied to the outer periphery of the bonded portion of bonded lens where the first lens 11 and the second lens 12 are contacted with each other. The clearance between the first lens 11 and a metallic mirror frame 15 is filled with the silicone adhesive 4 of the aforementioned embodiment 1, thereby fixedly bonding them.

Since the silicone adhesive 4 and the silicone oil 13 employed in this example were all formulated so as to minimize the contents of platinum group metallic catalyst, of multiple bond group, and of impurities such as transition metals and rare earth elements, it was possible to inhibit the generation of autofluorescence.

Especially, the silicone oil 13 employed was formulated so as to contain no platinum group metal catalyst and to extremely minimize the contents of multiple bond group (phenyl group, carbonyl group, thionyl group, ether group, acryl group, acetyl group, etc.), and of impurities such as transition metals and rare earth elements, it was possible to continuously inhibit the generation of fluorescence to be caused to occur due to the effect of excitation by n-electrons as these adhesives are irradiated with ultraviolet light. Further, the transmittance of the fluorescence of short wavelength region was also excellent, thus making it possible to obtain a fluorescence observing microscope which was free from the generation of discoloration.

Incidentally, it is possible obtain the same effects as described above even if silicone grease or silicone gel is employed in place of the silicone oil 13. The silicone oil 13 may be applied to the bonding of the lens of the optical system of the endoscope where a solid-state image pickup element is built therein.

The present invention should not be construed as being limited to the aforementioned embodiments. Namely, these embodiments of the present invention can be variously modified without departing the general inventive concept of the invention.

## Claims

1. A microscope for observation of fluorescence emitted from an object, comprising an objective lens formed of a plurality of lenses (2, 3), wherein a silicone-based bonding agent (4) containing a low-autofluorescent substance is interposed between the lenses (2, 3);
**characterized in that** the silicone-based bonding agent (4) is configured to bond the plurality of lenses (2, 3) to each other, wherein
the low-autofluorescent substance comprises organopolysiloxane with a main chain skeleton having at least two vinyl groups bonded to a silicon atom, and a thermal polymerization inhibitor, and
a content of low molecular siloxane is 0.004% or less, a content of impurities of transition metals and rare earth elements is 20 ppm or less, and a content of multiple-bond groups is 10% or less.

2. The microscope according to claim 1, wherein, in the low-autofluorescent substance, the content of impurities of transition metals and rare earth elements is 10 ppm or less.

3. The microscope according to claim 1, wherein, in the low-autofluorescent substance, the content of impurities of transition metals and rare earth elements is 1 ppm or less.

4. The microscope according to claim 1, wherein the silicone-based bonding agent (4) is silicone grease or silicone gel.

5. The microscope according to claim 1, wherein the silicone-based bonding agent (4) is an addition reaction type silicone-based adhesive.

6. The microscope according to claim 5, wherein the low-autofluorescent substance further comprises 20 ppm or less of platinum group metallic catalyst, and silane coupling agent.

7. The microscope according to claim 6, wherein the content of the platinum group metallic catalyst is 10 ppm or less.

8. The microscope according to claim 7, wherein the content of the platinum group metallic catalyst is 1 ppm or less.

9. The microscope according to claim 5, **characterized in that** the silicone-based bonding agent contains 10% or less by weight of a resin component.

10. The microscope according to claim 1, wherein the multiple-bond groups are selected from phenyl group, carbonyl group, thionyl group, ether group, acryl group and acetyl group.

## Patentansprüche

1. Mikroskop zur Beobachtung von von einem Objekt emittierter Fluoreszenz, das eine eine Vielzahl von Linsen (2, 3) umfassende Objektivlinse aufweist, wobei ein auf Silicon basierendes Haftmittel (4), das eine gering autofluoreszierende Substanz enthält, zwischen den Linsen (2, 3) eingefügt ist;
**dadurch gekennzeichnet, dass** das auf Silicon basierende Haftmittel (4) dazu ausgebildet ist, die Vielzahl von Linsen (2, 3) miteinander zu verbinden, wobei
die gering autofluoreszierende Substanz Organopolysiloxan mit einem Hauptkettengerüst, das mindestens zwei mit einem Siliciumatom verbundene Vinylgruppen besitzt, und einen thermischen Polymerisationsinhibitor aufweist, und
ein Gehalt an niedermolekularem Siloxan 0,004 % oder weniger, ein Gehalt an Fremdstoffen aus Übergangsmetallen und Seltenerdmetallen 20 ppm oder weniger und ein Gehalt an Mehrfachverbundgruppen 10 % oder weniger beträgt.

2. Mikroskop nach Anspruch 1, wobei in der gering autofluoreszierenden Substanz der Gehalt an Fremdstoffen aus Übergangsmetallen und Seltenerdmetallen 10 ppm oder weniger beträgt.

3. Mikroskop nach Anspruch 1, wobei in der gering autofluoreszierenden Substanz der Gehalt an Fremdstoffen aus Übergangsmetallen und Seltenerdmetallen 1 ppm oder weniger beträgt.

4. Mikroskop nach Anspruch 1, wobei das auf Silicon basierende Haftmittel (4) Siliconfett oder Silicongel ist.

5. Mikroskop nach Anspruch 1, wobei das auf Silicon basierende Haftmittel (4) ein auf Silicon basierender Klebstoff vom Additionsreaktionstyp ist.

6. Mikroskop nach Anspruch 5, wobei die gering autofluoreszierende Substanz des Weiteren 20 ppm oder weniger Metallkatalysator der Platingruppe und einen Silan-Haftvermittler aufweist.

7. Mikroskop nach Anspruch 6, wobei der Gehalt an Metallkatalysator der Platingruppe 10 ppm oder weniger beträgt.

8. Mikroskop nach Anspruch 7, wobei der Gehalt an Metallkatalysator der Platingruppe 1 ppm oder weniger beträgt.

9. Mikroskop nach Anspruch 5, **dadurch gekennzeichnet, dass** das auf Silicon basierende Haftmittel 10 Gewichts-% oder weniger einer Harzkomponente enthält.

10. Mikroskop nach Anspruch 1, wobei die Mehrfachverbundgruppen ausgewählt werden aus Phenylgruppe, Carbonylgruppe, Thionylgruppe, Ethergruppe, Acrylgruppe oder Acetylgruppe.

## Revendications

1. Microscope pour une observation d'une fluorescence émise d'un objet, comprenant un objectif formé d'une pluralité de lentilles (2, 3), dans lequel un agent de liaison (4) à base de silicone contenant une substance à faible autofluorescence est interposé entre les lentilles (2, 3) ;
**caractérisé en ce que** l'agent de liaison (4) à base de silicone est configuré pour lier la pluralité de lentilles (2, 3) l'une à l'autre, dans lequel
la substance à faible autofluorescence comprend un organopolysiloxane avec un squelette de chaîne principale ayant au moins deux groupes vinyle liés à un atome de silicium, et un inhibiteur de polymérisation thermique, et
une teneur en siloxane de faible poids moléculaire est 0,004 % ou moins, une teneur en impuretés de métaux de transition et d'éléments des terres rares est 20 ppm ou moins, et une teneur en groupes à liaisons multiples est 10 % ou moins.

2. Microscope selon la revendication 1, dans lequel, dans la substance à faible autofluorescence, la teneur en impuretés de métaux de transition et d'éléments des terres rares est 10 ppm ou moins.

3. Microscope selon la revendication 1, dans lequel, dans la substance à faible autofluorescence, la teneur en impuretés de métaux de transition et d'éléments des terres rares est 1 ppm ou moins.

4. Microscope selon la revendication 1, dans lequel l'agent de liaison (4) à base de silicone est une graisse de silicone ou un gel de silicone.

5. Microscope selon la revendication 1, dans lequel l'agent de liaison (4) à base de silicone est un adhésif à base de silicone de type à réaction d'addition.

6. Microscope selon la revendication 5, dans lequel la substance à faible autofluorescence comprend en outre 20 ppm ou moins d'un catalyseur métallique du groupe du platine, et un agent de couplage silane.

7. Microscope selon la revendication 6, dans lequel la teneur en catalyseur métallique du groupe du platine est 10 ppm ou moins.

8. Microscope selon la revendication 7, dans lequel la teneur en catalyseur métallique du groupe du platine est 1 ppm ou moins.

9. Microscope selon la revendication 5, **caractérisé en ce que** l'agent de liaison à base de silicone contient 10 % ou moins en poids d'un composant résineux.

10. Microscope selon la revendication 1, dans lequel les groupes à liaisons multiples sont choisis parmi un groupe phényle, un groupe carbonyle, un groupe thionyle, un groupe éther, un groupe acrylique et un groupe acétyle.
